# DEMANDE DE BREVET EUROPEEN

(11) **EP 1 251 428 A1**
(43) Date de publication de la demande: **23.10.2002**
(21) Numéro de dépôt: 02290988.1
(22) Date de dépôt: 18.04.2002
(51) Int. Cl.: G06F 9/445

(54) **Système de programmation de calculateurs d'un système informatique embarqué à bord d'un véhicule automobile**

(30) Priorité: 19.04.2001 FR 0105327
(71) Demandeur: Peugeot Citroen Automobiles SA, 92200 Neuilly sur Seine (FR)
(72) Inventeur: Lopez, Thierry, 78700 Conflans-Ste-Honorine (FR)
(74) Mandataire: Jacobson, Claude

(57) **Abrégé**

Ce système de programmation de calculateurs d'un système informatique embarqué à bord d'un véhicule automobile et dans lequel les différents calculateurs (1,2,3) sont raccordés par un réseau de transmission d'informations (4), la programmation des calculateurs étant réalisée à l'aide d'un outil de programmation (9) adapté pour être raccordé à ces calculateurs, les calculateurs comportant des moyens de stockage de défauts de fonctionnement et des moyens d'échange d'informations à travers le réseau, est caractérisé en ce qu'il comporte des moyens (9a) de commutation des calculateurs dans un mode de fonctionnement de programmation, dans lequel le fonctionnement des moyens de stockage de défauts et des moyens d'échange d'informations de ceux-ci, est inhibé.

## Description

La présente invention concerne un système de programmation de calculateurs d'un système informatique embarqué à bord d'un véhicule automobile.

Dans un tel système informatique, les différents calculateurs sont raccordés par un réseau de transmission d'informations et la programmation des calculateurs est réalisée à l'aide d'un outil de programmation adapté pour être raccordé à ces calculateurs.

La modernisation et le taux d'équipement toujours croissant des véhicules automobiles en terme de systèmes informatiques conduisent à rendre de plus en plus complexe la gamme de montage associée de composants correspondants dans un véhicule au cours d'un processus d'intégration.

L'explosion du nombre de calculateurs embarqués dans les véhicules n'a d'ailleurs fait qu'accentuer ce phénomène.

En effet, pour rendre un véhicule automobile pleinement fonctionnel en sortie de chaîne de montage, il ne suffit plus aujourd'hui d'assembler et de connecter des composants entre eux, mais il faut également les programmer, c'est-à-dire en fait les configurer et paramétrer des logiciels téléchargés ou télécodés et embarqués dans les calculateurs pour prendre en compte la configuration spécifique de chaque véhicule ainsi que d'autres besoins annexes, comme par exemple la protection de ce véhicule ou d'équipements par exemple audiophoniques embarqués (protection contre le vol).

Jusqu'à présent, les calculateurs d'un véhicule automobile étaient configurés, c'est-à-dire téléchargés, télécodés, etc..., directement en fin de chaîne depuis une ligne série appelée « ligne K » au moyen d'un outil de programmation disposé en bord de ligne et muni par exemple d'un protocole de communication spécifique.

Dans ce cas, les réseaux de transmission d'informations utilisés entre les calculateurs, tels que par exemple les réseaux de type CAN ou VAN bien connus dans l'état de la technique, restent utilisés pour assurer la transmission des informations entre les calculateurs pendant le fonctionnement du véhicule.

On peut prendre par exemple le cas d'une information de vitesse de véhicule transmise depuis le calculateur de freinage (calculateur ABS) vers les calculateurs multifonctions moteur (calculateur CMM), de boîte de vitesses automatique (calculateur BVA) et d'habitacle encore appelé calculateur de boîtier de servitude intelligent ou BSI.

Pour la sécurité des utilisateurs du véhicule, ces calculateurs sont munis de moyens de diagnostic de trames de communication, qui surveillent les trames émises par les autres calculateurs devant lui fournir des informations.

Ces moyens de diagnostic permettent notamment de déclencher le stockage de codes de défauts de fonctionnement associés par exemple à la non-réception de trames ou à la réception de trames invalides pour activer, lorsqu'ils existent, des modes de fonctionnement de secours.

Le fait est que l'implémentation de ce type de fonctions de diagnostic et de stockage de défauts de fonctionnement, n'est pas sans conséquence pour le processus de montage d'un véhicule ou de réparation dans le réseau d'après-vente d'un constructeur.

En effet, les opérations de programmation, c'est-à-dire en fait par exemple de configuration des calculateurs, s'effectuant en bout de ligne d'assemblage, c'est-à-dire dans les dernières minutes avant la sortie de chaîne de montage, lorsque l'on met sous tension le véhicule, c'est-à-dire lorsque l'on établit le + APC en tournant la clé de contact de celui-ci, pour configurer un calculateur depuis sa ligne série K, les autres calculateurs déjà montés dans le véhicule ne peuvent s'en rendre compte, ce qui les conduit à détecter et à stocker des défauts de fonctionnement, car le fonctionnement nominal du système informatique n'est pas assuré.

Or, les opérations de programmation s'effectuent calculateur par calculateur avec plusieurs établissements et coupures de tension d'alimentation, de sorte qu'à la fin du processus de programmation, les moyens de stockage ont mémorisé un grand nombre de défauts de fonctionnement et qu'il devient alors extrêmement difficile de faire le tri entre les vraies défaillances détectées par chaque calculateur et les événements liés au processus de montage et de programmation.

Par ailleurs, certains calculateurs déjà montés à bord du véhicule peuvent utiliser le réseau pour échanger des informations, ce qui se traduit par un encombrement de la ligne ralentissant le processus de programmation.

Le but de l'invention est donc de résoudre ces problèmes.

A cet effet, l'invention a pour objet un système de programmation de calculateurs d'un système informatique embarqué à bord d'un véhicule automobile et dans lequel les différents calculateurs sont raccordés par un réseau de transmission d'informations, la programmation des calculateurs étant réalisée à l'aide d'un outil de programmation adapté pour être raccordé à ces calculateurs, les calculateurs comportant des moyens de stockage de défauts de fonctionnement et des moyens d'échange d'informations à travers le réseau, caractérisé en ce qu'il comporte des moyens de commutation des calculateurs dans un mode de fonctionnement de programmation, dans lequel le fonctionnement des moyens de stockage de défauts et des moyens d'échange d'informations de ceux-ci, est inhibé.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure générale d'un exemple de réalisation d'un système de programmation selon l'invention ; et
- la Fig.2 représente un schéma synoptique illustrant une variante de réalisation de ce système.

On a en effet représenté sur ces figures, un système informatique embarqué à bord d'un véhicule automobile, comprenant plusieurs calculateurs, tels que par exemple un calculateur de boîte de vitesses automatique désigné par la référence générale 1, un calculateur de freinage désigné par la référence générale 2 et un calculateur multifonctions moteur désigné par la référence générale 3.

Ces calculateurs sont reliés par un réseau de transmission d'informations désigné par la référence générale 4 de type classique.

Ce réseau de transmission d'informations est également raccordé à un connecteur désigné par la référence générale 5, ce connecteur étant également relié à travers des liaisons par exemple 6 et 7, à la ligne K des calculateurs pour assurer de façon classique leur programmation, ou d'autres fonctions de diagnostics largement utilisées dans le réseau d'entretien du véhicule telles que la consultation de paramètres dynamiques du véhicule roulant comme par exemple la consultation de la température d'eau.

Le connecteur 5 est associé à un connecteur complémentaire désigné par la référence générale 8, lui-même raccordé à un outil de programmation 9 qui peut par exemple être un outil de programmation externe au véhicule et disposé en bord de ligne de montage du véhicule.

Pour résoudre les problèmes décrits précédemment concernant la programmation des calculateurs, il est prévu des moyens de commutation des calculateurs dans un mode de fonctionnement de programmation dans lequel le fonctionnement des moyens de stockage de défauts et des moyens d'échange d'informations de ceux-ci, est inhibé.

Ceci permet alors d'éviter que ces calculateurs ne stockent des codes de défauts de fonctionnement lors de cette phase de programmation.

Par ailleurs, ceci permet également d'éviter que ces calculateurs n'échangent des informations sur le réseau, ce qui permet de libérer complètement celui-ci pour les opérations de programmation.

La bande passante du réseau est alors libérée au maximum et est dédiée exclusivement à l'opération de programmation elle-même.

Ceci est rendu possible par le fait que les opérations de programmation des calculateurs d'un véhicule, s'effectuent toujours lorsque celui-ci est non roulant et moteur à l'arrêt.

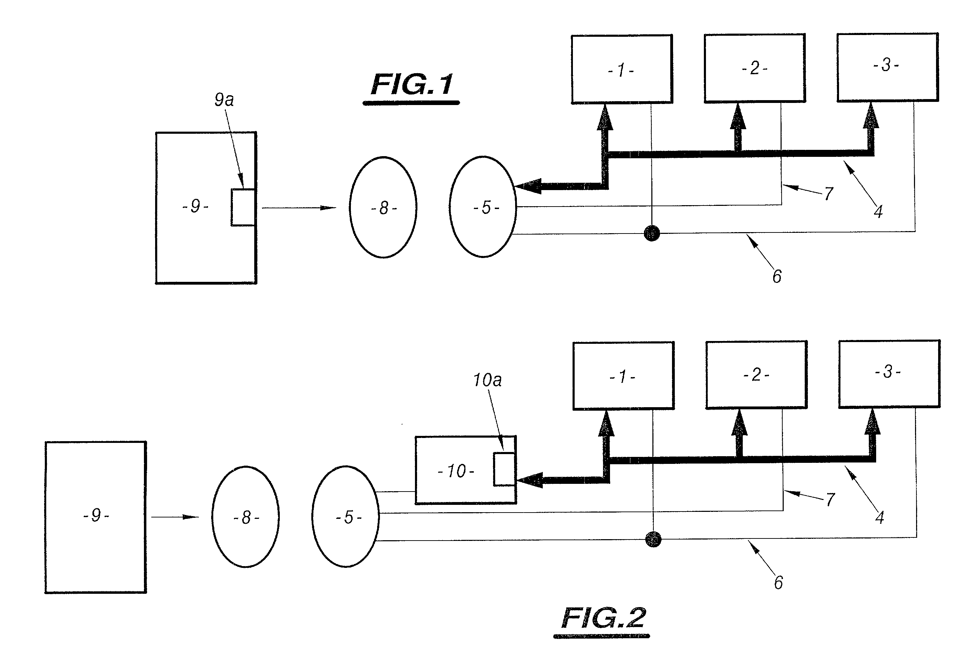

Dans l'exemple décrit sur cette figure 1, les moyens de commutation sont désignés par la référence générale 9a et intégrés dans l'outil de programmation 9 et celui-ci est relié à travers les moyens de connexion complémentaires 8 et 5 au réseau 4 pour émettre sur celui-ci un message correspondant à une requête de commutation des calculateurs en mode de programmation.

Cette requête peut par exemple se présenter sous la forme d'une trame émise périodiquement sur le réseau pendant une période de temps prédéterminée.

Ainsi, cette trame peut être émise par exemple toutes les 100 ms pendant une seconde, et les calculateurs sont alors adaptés pour basculer en mode de programmation après avoir reçu trois trames identiques et successives.

La commutation en mode de programmation se fait alors individuellement pour chaque calculateur sur réception de ces trames, celles-ci étant émises dans l'exemple de la figure 1 par l'outil de programmation sur le réseau et ne nécessitant pas de réponse de la part des calculateurs

On a représenté sur la figure 2, une variante de réalisation de ce système.

On reconnaît sur cette figure, les calculateurs de boîte de vitesses automatique 1, de freinage 2 et multifonctions moteur 3, le réseau de transmission d'informations 4, les liaisons 6 et 7, les connecteurs 5 et 8 et l'outil de programmation 9.

Dans cette variante de la figure 2, les moyens de commutation des calculateurs dans leur mode de fonctionnement de programmation sont intégrés dans un calculateur de boîtier de servitude intelligent désigné par la référence générale 10 sur cette figure, ce calculateur 10 étant également relié à travers les moyens de connexion complémentaires 5 et 8 à l'outil de programmation 9.

Sur cette figure, les moyens de commutation sont désignés par la référence générale 10a.

L'outil de programmation 9 est alors adapté pour piloter ce calculateur 10 afin de déclencher l'émission sur le réseau du message correspondant à la requête de commutation des calculateurs en mode de programmation, cette requête pouvant se présenter sous la forme décrite précédemment.

Il va de soi bien entendu que d'autres modes de réalisation peuvent être envisagés.

## Revendications

1. Système de programmation de calculateurs d'un système informatique embarqué à bord d'un véhicule automobile et dans lequel les différents calculateurs (1,2,3,10) sont raccordés par un réseau de transmission d'informations (4), la programmation des calculateurs étant réalisée à l'aide d'un outil de programmation (9) adapté pour être raccordé à ces calculateurs, les calculateurs comportant des moyens de stockage de défauts de fonctionnement et des moyens d'échange d'informations à travers le réseau, **caractérisé en ce qu'**il comporte des moyens (9a ; 10a) de commutation des calculateurs dans un mode de fonctionnement de programmation, dans lequel le fonctionnement des moyens de stockage de défauts et des moyens d'échange d'informations de ceux-ci, est inhibé.

2. Système selon la revendication 1, **caractérisé en ce que** les moyens de commutation (10a) sont intégrés dans un calculateur (10) du système informatique embarqué.

3. Système selon la revendication 2, **caractérisé en ce que** le calculateur est un calculateur de boîtier de servitude intelligent (10).

4. Système selon la revendication 1, **caractérisé en ce que** les moyens de commutation (9a) sont intégrés dans l'outil de programmation (9).

5. Système selon l'une quelconque des revendications précédentes, **caractérisé en ce que** les moyens de commutation (9a ;10a) sont adaptés pour émettre sur le réseau (4) un message correspondant à une requête de commutation des calculateurs en mode de programmation.

6. Système selon la revendication 5, **caractérisé en ce que** la requête se présente sous la forme d'une trame émise périodiquement sur le réseau pendant une période de temps prédéterminée.

7. Système selon la revendication 6, **caractérisé en ce que** la trame est émise toutes les 100 ms pendant 1s.

8. Système selon la revendication 6 ou 7, **caractérisé en ce que** les calculateurs sont adaptés pour basculer en mode de programmation après avoir reçus trois trames successives et identiques.

9. Système selon l'une quelconque des revendications précédentes, **caractérisé en ce que** l'outil de programmation (9) est un outil externe au véhicule et adapté pour être raccordé au réseau de transmission d'informations (4) à travers des connecteurs complémentaires (5,8).
